# EUROPEAN PATENT APPLICATION

(11) **EP 2 584 405 A2**
(43) Date of publication of application: **24.04.2013**
(21) Application number: 12188788.9
(22) Date of filing: 17.10.2012
(51) Int. Cl.: G03B 21/60, G03B 21/14, H04N 9/31

(54) **Projection system used in a vehicle**

(30) Priority: 18.10.2011 TW 100137701
(71) Applicant: Young Optics Inc., Hsinchu 30076 (TW)
(72) Inventor: Chung, Po-Jen, Hsinchu 300 (TW); Lin, Wei-Szu, Hsinchu 300 (TW); Tsai, Chih-Hsien, Hsinchu 300 (TW); Li, Kang-Hsi, Hsinchu 300 (TW); Chou, Hung-Chih, Hsinchu 300 (TW); Huang, Chien-Jung, Hsinchu 300 (TW)
(74) Representative: TER MEER - STEINMEISTER & PARTNER GbR

(57) **Abstract**

A projection system used in a vehicle including a projection apparatus, a projection screen, and an image correction module is provided. The projection apparatus provides an image beam. The projection screen receives the image beam. The image beam forms an image on the projection screen. The projection screen is a non-flat plane. The image correction module corrects the image beam to compensate a distortion of the projected image based on the surface contour of the image screen.

## Description

### CROSS-REFERENCE TO RELATED APPLICATION

This application claims the priority benefit of Taiwan application serial no. 100137701, filed on October 18, 2011. The entirety of the above-mentioned patent application is hereby incorporated by reference herein and made a part of this specification.

### BACKGROUND OF THE INVENTION

### TECHNICAL FIELD

The invention relates to a projection system used in a vehicle, more particularly to a projection system for vehicles, wherein the projection screen thereof is a non-flat plane.

### BACKGROUND

With the rapid development of technologies, many advanced audio/video, navigation, and telephone functions are installed in a vehicle instrument panel. The vehicle instrument panel becomes overcrowded when many conventional buttons or knobs for controlling these functions are installed thereon. Accordingly, automobile manufacturers apply the touch screen technology for controlling these complicated functions to simplify the panel design. Currently, the automobile manufacturers employ thin film transistor liquid crystal displays (TFT-LCDs) for designing the vehicle instrument panel. Since the manufacturing process of TFT-LCDs and semiconductors similarly requires the techniques of vacuum evaporation deposition and etching, a glass material is normally selected as a substrate material because it is corrosion-resistant to strong acid and tolerant to high temperature. Because of the uniformity requirement of deposition layer by vacuum evaporation, the glass material on which the deposition layer is formed by vacuum evaporation has to be a very smooth flat plane. Accordingly, the potential of TFT-LCDs having other exterior designs is greatly limited. Although the latest technology of an organic light emitting diode display provides a feature of a flexible display, a wider view angle and a better color saturation, other technical problems are yet to be overcome. For example, the mass production technique is insufficient, the lifetime of an OLED is shorter than that of an LCD, and the large-size application is immature.

Currently, the mainstream screen technology, of either an LCD or an OLED, is unable to effectively adopt a curved screen display, which is highly practical, and can have a large screen size and a long lifetime. Presently, the exterior design of a screen display for being used in a vehicle is usually restricted to a panel with a flat surface; therefore, the automobile manufactures are limited to design a prosaic display interface.

Accordingly, a projection system having a curved projection screen allows the display interface used in the vehicle to have more variations. If such a projection system is applied to an automobile audio/video (A/V) system, a diversity of designs for the A/V system is provided and the cost is reduced. However, integrating the curvature of the projection screen of an automobile audio/video system with the interior design of the vehicle, while delivering a good quality and low distortion image, is rather difficult to achieve. The US patent publication number 20100182236 and the US patent number 6999133 both disclose an image correction technology of a projection system.

### SUMMARY

An exemplary embodiment of the invention provides a projection system used in a vehicle, wherein a curved projection screen is provided, and a curvature of the projection screen is compatible with an interior design of a vehicle. The projection system also provides good quality and low distortion image.

Other objects and advantages of the invention may be further understood by referring to the technical features broadly embodied and described as follows.

To achieve a part or all or other objects and advantages of the invention, an exemplary embodiment of the invention provides a projection system used in a vehicle, and the projection system includes a projection apparatus, a projection screen, and an image correction module. The projection apparatus provides an image beam. The projection screen receives the image beam. The image beam forms an image on the projection screen. Further, the projection screen is a non-flat plane. The image correction module used to correct the image beam based on a surface contour of the projection screen and compensates a distortion of the image generated by the image beam projected to the projection screen.

In an exemplary embodiment of the invention, the image correction module includes a lens set. The lens set is disposed inside the projection apparatus. After the image beam passes through the lens set, the image beam is projected onto the projection screen. The lens set corrects the image beam and provides different degrees of magnification in different directions based on the surface contour of the projection screen.

In an exemplary embodiment of the invention, the image correction module includes a lens set disposed between the projection apparatus and the projection screen. The image beam is projected from the projection apparatus, passes through the lens set, and is projected onto the projection screen. The lens set corrects the image beam and provides different degrees of magnification in different directions based on the surface contour of the projection screen.

In an exemplary embodiment of the invention, the image correction module is an image processing circuit disposed inside the projection apparatus. The image processing circuit corrects the image beam based on the surface contour of the projection screen.

According to the exemplary embodiments of the invention, the projection system used in a vehicle applies an optical or an electronic image correction module to perform an image correction for the projection screen with a curved or an irregular surface. Hence, good quality, low distortion and non-deformed image are resulted.

Other objectives, features and advantages of the invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

Figure 1 is a schematic diagram illustrating a projection system with a projection apparatus configured with a flat projection screen.

Figure 2 is a schematic diagram showing an image projected by the projection system in Figure 1 on the flat projection screen.

Figure 3 is a schematic diagram illustrating a projection system with a projection apparatus configured with a curved projection screen.

Figure 4 is a schematic diagram showing an image on the curved projection screen projected by the projection system in Figure 3.

Figure 5 is a schematic diagram illustrating a projection system used in a vehicle according to an exemplary embodiment of the invention.

Figure 6 illustrates a corrected image and an image on the curved projection screen formed by the projection system used in a vehicle in Figure 5.

Figure 7 is a schematic diagram of a projection system used in a vehicle according to another exemplary embodiment of the invention.

Figure 8 illustrates a corrected image and an image on the curved projection screen formed by the projection system used in a vehicle in Figure 7.

Figure 9 is a schematic diagram of a projection system used in a vehicle according to another exemplary embodiment of the invention.

Figure 10 illustrates a corrected image and an image on the curved projection screen formed by the projection system used in a vehicle in Figure 9.

Figure 11 is a schematic diagram illustrating a disposition of a projection system used in a vehicle according to an exemplary embodiment of the invention.

### DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

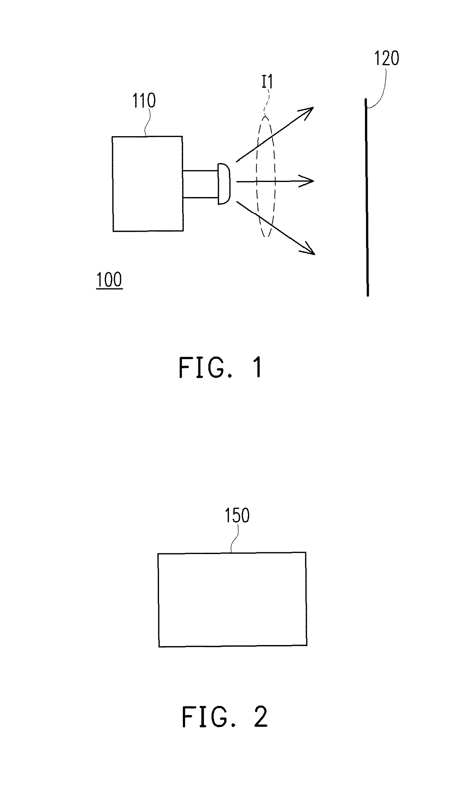

Figure 1 is a schematic diagram illustrating a projection system arranged with a projection apparatus having a flat projection screen. Figure 2 is a schematic diagram showing an image projected by the projection system in Figure 1 on the flat projection screen. Referring to both Figures 1 and 2, the projection apparatus 110 projects an image beam I1 to the projection screen 120, allowing a viewer to view a corresponding image 150 on the projection screen 120. In this projection system 100, the projection screen 120 is a flat plane; accordingly, a low distorted and non-deformed image 150 is viewed by the viewer.

However, if the projection system 100 is applied to an audio/video system of a vehicle, diversifying the design of the audio/video system is limited by the flat projection screen because the surface contour of the projection screen is incompatible with the vehicle's interior design.

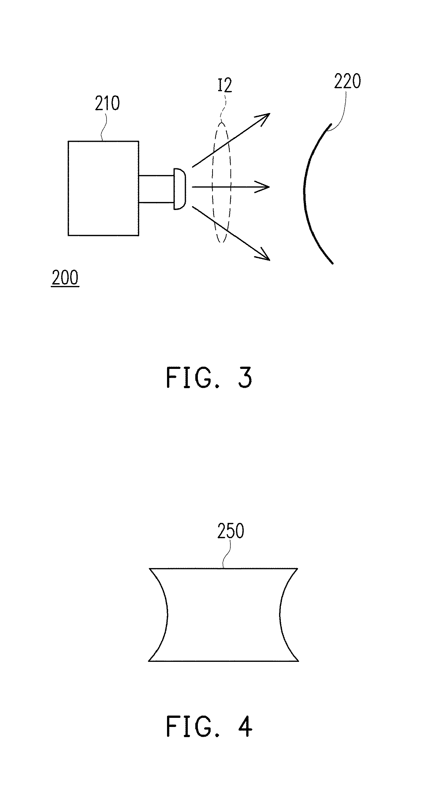

Figure 3 is a schematic diagram illustrating a projection system with a projection apparatus configured with a curved projection screen. Figure 4 is a schematic diagram showing an image on the curved projection screen projected by the projection system in Figure 3. Referring to both Figures 3 and 4, to diversify the design of a vehicle audio/video system or a control panel interface, the projection apparatus 210 is configured with a curved projection screen 220 to provide an effective and practical curved-screen projection system 200. Further, in contrary to the LCD or OLED displays, in which complicated semiconductor processes must be entailed, the projection system of the exemplary embodiment of the invention is obviated from such semiconductor processes. Further, the highly conformable projection screen 220 may evolve into a variety of screen styles, which promote harmonizing a curvature of the curved projection screen 220 with the interior design of the vehicle.

However, if an image beam 12 projected by the projection apparatus 210 is not being corrected, a deformed image 250 is generated when an image is displayed on the curved projection screen 220. Although the projection system 200 designed with the curved projection screen 220 conforms well with the interior design of the vehicle, with the deformed image, not only the gratification, provided to the viewer from the multimedia system, diminishes, the viewer is unable to receive an accurate and clear display interface. Hence, disposing the projection system 200 in the vehicle becomes futile.

According to the exemplary embodiments of the invention, various approaches are used to resolve the image deformation problem generated by an irregular curved projection screen. When an optical approach is applied, a lens with a special magnification is used or an image correction lens module is placed between an ordinary lens and the curved projection screen. When an electronic approach is applied, an image processing circuit is employed to correct the image signal for resolving the problem of the deformed image on the curved projection screen.

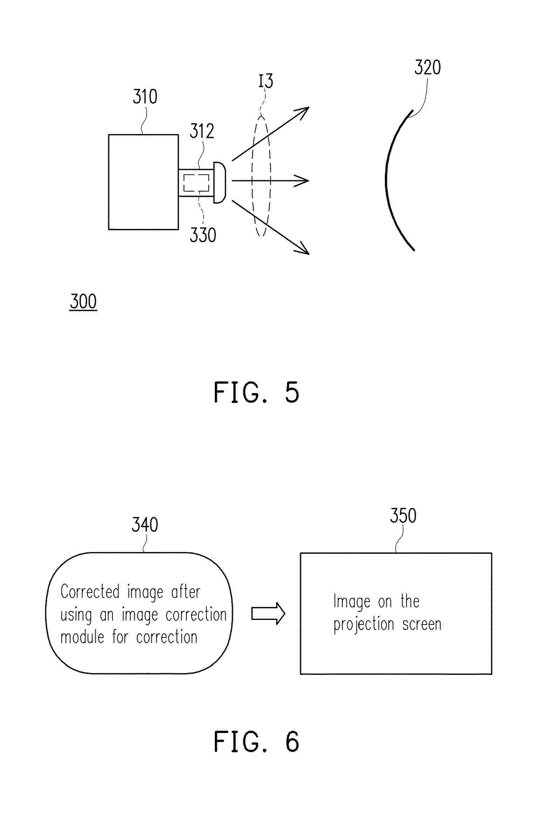

Figure 5 is a schematic diagram illustrating a projection system used in a vehicle according to an exemplary embodiment of the invention. Figure 6 illustrates a corrected image and an image on a projection screen formed by the projection system used in a vehicle in Figure 5. Referring to Figs. 5 and 6, a vehicle projection system 300 of this exemplary embodiment includes a projection apparatus 310, a projection screen 320, and an image correction module 330, wherein the projection apparatus 310 is configured with a projection lens 312 for projecting an image beam I3. In this exemplary embodiment, the image correction module 330 is, for example, a lens set disposed inside the projection lens 312.

After the image beam 13 passes through the image correction module 330 of the projection lens 312, a corrected image 340 is formed. The projection screen 320 serves to receive the corrected image beam 13, and an image 350 is displayed on the projection screen 320. The image correction module 330 inside the projection lens 312 of the projection apparatus 310 corrects the image beam 13 in advance according to the surface contour of the projection screen 320 to compensate a distortion of the image prior to a correction. Hence, the image beam 13 forms the adjusted image 350 on the projection screen 320. In this exemplary embodiment, a correction in advance refers to perform a correction step prior to the projection of the image beam 13 from the projection apparatus 310. Accordingly, the image beam 13 corresponds to the corrected image 340 that has been corrected in advance.

In this exemplary embodiment, the surface of the projection screen 320 is a non-flat plane, such as a curved or an irregular surface. The lens set of the image correction module 330, in which the degrees of magnification are different in all directions on the projection screen, correspondingly compensates the pre-correction image beam that has not yet been projected from the projection apparatus 310 based on the surface contour of the projection screen 320. Accordingly, even the projection screen 320 is a non-flat plane, a quality, low distorted, and non-deformed image 350 is viewed by the viewer from the projection screen 320.

For example, when an uncorrected image beam 13 is projected to a non-flat projection screen 320 and a pincushion distortion image appears, the image correction module 330 is designed according to the surface contour of the projection screen 320; for example, a lens set for correcting the pincushion distortion is provided inside the projection apparatus 310. Similarly, when the uncorrected image beam 13 is projected to a non-flat projection screen 320 and a barrel distortion image appears, the image correction module 330 is designed based on the surface contour of the projection screen 320; for example, a lens set for correcting the barrel distortion is provided inside the projection apparatus 310.

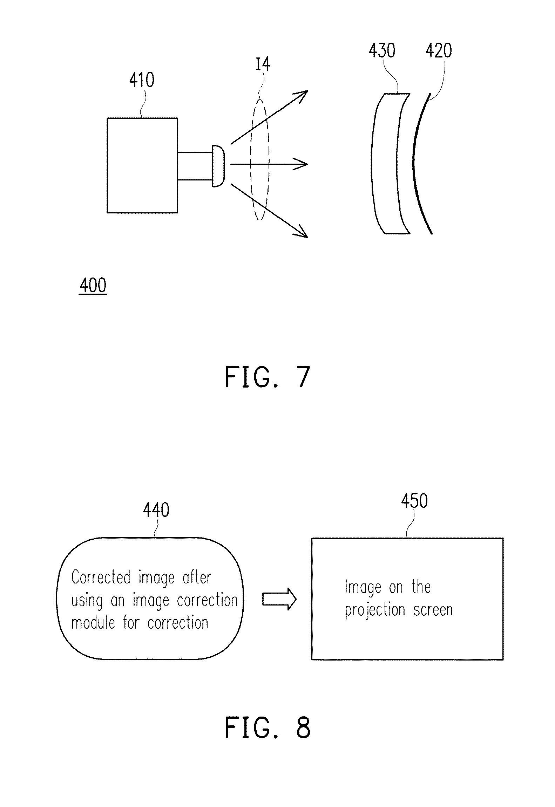

Figure 7 is a schematic diagram of a projection system used in a vehicle according to another exemplary embodiment of the invention. Figure 8 illustrates a corrected image and an image on a projection screen formed by the projection system used in a vehicle in Figure 7. Referring to both Figures 7 and 8, the projection system 400 in this exemplary embodiment is similar to the projection system 300 in Figure 5. The main difference between the two projection systems lies in a position of the image correction module 430, in which the image correction module 430 of the projection system 400 used in a vehicle is disposed outside the projection apparatus 410. In this exemplary embodiment, the image correction module 430 is disposed between the projection apparatus 410 and a projection screen 420. Further, the image correction module 430 is designed to correct an image beam 14 in accordance to the surface contour of the projection screen 420.

In this exemplary embodiment, the surface of the projection screen 420, for example, is not a flat plane, which has either a curved or irregular surface contour. Herein, the image correction module 430 is disposed at a side of the projection screen 420 for receiving the image beam 14 and correcting the image beam 14 in accordance to the surface contour of the projection screen 420. After the image beam 14 provided by the projection apparatus 410 passes through the image correction module 430, a corrected image 440, being corrected in advance is formed and generates an image 450 projected on the projection screen 420. In this exemplary embodiment, the degrees of magnification of the correction lens set of the image correction module 430 are not equal in all directions in correspondence to the surface contour of the projection screen 420 , such that the image beam 14 that passes through is compensated and corrected.

In the above exemplary embodiments, the projection lens with a lens set having a special magnification is used or a correction lens set is placed at a side of the non-flat screen. However, it is to be understood these exemplary embodiments are presented by way of example and not by way of limitation. In other exemplary embodiments, the projection system used in a vehicle may use an electronic image correction method to resolve the image distortion problems resulted from an irregular curved screen.

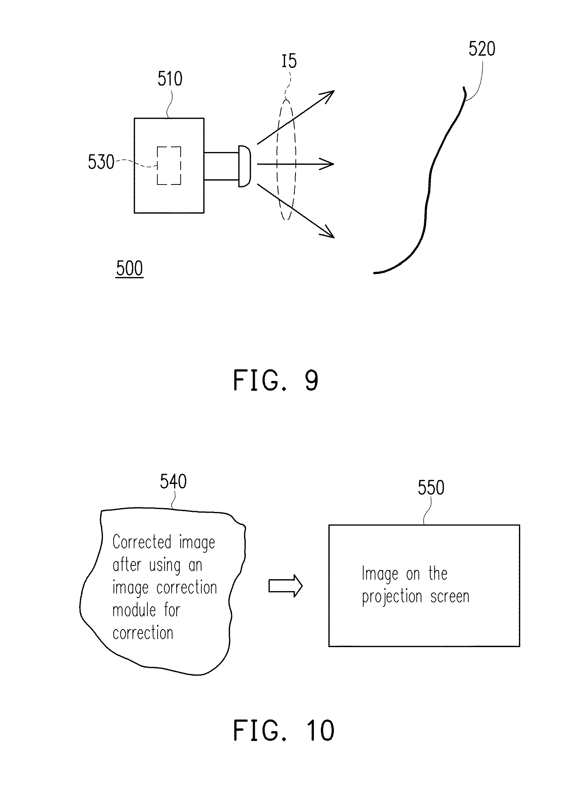

Figure 9 is a schematic diagram of a projection system used in a vehicle according to another exemplary embodiment of the invention. Figure 10 illustrates a corrected image and an image on a projection screen formed by the projection system used in a vehicle in Figure 9. Referring to both Figures 9 and 10, the projection system 500 in this exemplary embodiment is similar to the projection system 300 in Figure 5, one major difference between the two projection systems lies in an image correction module 530 of the projection system 500 used in a vehicle being an image processing circuit disposed inside a projection apparatus 510.

In this exemplary embodiment, the surface of the projection screen 520 is non-planar, for example, having an irregular surface contour. The circuit structure of the image processing circuit of the image correction module 530 is designed in accordance to the irregular surface contour of the projection screen 520. By using a detection device (not shown), the irregular surface contour of the projection screen 520 is detected, and an image beam I5 that has not yet been projected from the projection apparatus 510 is compensated and corrected to form a corrected image 540. Hence, the image beam I5, after being corrected by the image processing circuit and projected onto the projection screen 520, forms a good quality, low distorted and non-deformed image 550 to be viewed by a viewer, even with the non-flat projection screen 520. Alternatively speaking, applying the electronic signal image correction method, a distorted and deformed image can be compensated.

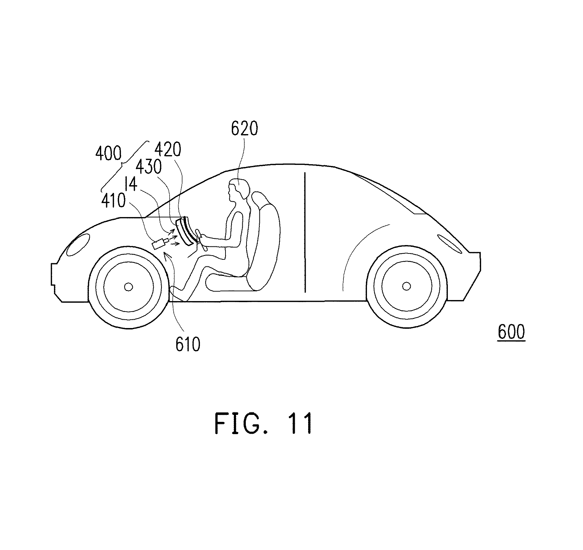

Figure 11 is a schematic diagram illustrating a projection system used in a vehicle according to an exemplary embodiment of the invention. In this exemplary embodiment, the projection system 400 used in a vehicle described in Figures 7 and 8 are configured in a vehicle instrument panel 610 of a vehicle 600. Referring to Figures 7, 8 and 11, the projection apparatus 410 of the projection system 400 in this exemplary embodiment is disposed inside the vehicle instrument panel 610 at a front side of the vehicle 600. The projection screen 420 with a curved or irregular surface contour of the projection system 400 is disposed on an operation interface of the vehicle instrument panel 610. Further, the image correction module 430 is disposed between the projection apparatus 410 and the projection screen 420. When the image beam 14 is projected from the projection apparatus 410 and passes through the image correction module 430, the image correction module 430 corrects the image beam 14 in accordance to the surface contour of the projection screen 420. Consequently, the image 450 of the image beam 14 projected to the projection screen 420 is not deformed and is readily available for a driver 620 to operate on.

According to the above exemplary embodiments of the invention, for a projection screen having a special curved or irregular surface contour, the projection system used in a vehicle is provided with a lens set in which the degrees of magnification are not equal in all directions to compensate the image deformation problem. Moreover, for the consideration of production cost, the correction module may be disposed between the projection apparatus and its projection screen. Accordingly, re-designing the special lens in the projection lens for different curved projection screens may be precluded, and only designing the correction lens set is required. Moreover, the correction of an image may be accomplished electronically, in which the input image signal is corrected in advance to resolve the image deformation and distortion problems generated by the curved projection screen. Actually, correcting the image deformation and distortion problems generated by an extremely irregular curved projection screen via the electronic approach is more convenient than the optical approach.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A projection system used in a vehicle, comprising:
a projection apparatus projecting an image beam;
a projection screen receiving the image beam, wherein the image beam forms an image on the projection screen and the projection screen is a non-flat plane; and
an image correction module used to correct the image beam based on a surface contour of the projection screen, wherein the image correction module compensates a distortion of the image generated by the image beam projected to the projection screen.

2. The projection system used in a vehicle according to claim 1, wherein the image correction module includes a lens set, disposed inside the projection apparatus, and after the image beam passes through the lens set, the image beam is projected onto the projection screen, wherein the lens set corrects the image beam based on the surface contour of the projection screen.

3. The projection system used in a vehicle according to claim 1, wherein the image correction module includes a lens set, disposed between the projection apparatus and the projection screen, and the image beam is projected from the projection apparatus, passes through the lens set, and is projected onto the projection screen, wherein the lens set corrects the image beam based on the surface contour of the projection screen.

4. The projection system used in a vehicle according to claim 2 or 3, wherein the lens set provides different degrees of magnification in different directions based on the surface contour of the projection screen.

5. The projection system used in a vehicle according to claim 1, wherein the image correction module is an image processing circuit, disposed inside the projection apparatus, and the image processing circuit corrects the image beam based on the surface contour of the projection screen.

6. The projection system used in a vehicle according to anyone of claims 1 to 5, wherein a surface of the projection screen is a curved surface.

7. The projection system used in a vehicle according to anyone of claims 1 to 5, wherein a surface of the projection screen is an irregular surface.
